(19) Europäisches Patentamt
European Patent Office
Office européen des brevets

(11) EP 3 921 589 B1

# (12) EUROPEAN PATENT SPECIFICATION

(45) Date of publication and mention of the grant of the patent:
**09.07.2025 Bulletin 2025/28**

(21) Application number: **20802388.7**

(22) Date of filing: **06.02.2020**

(51) International Patent Classification (IPC):
***F41H 5/02*** *(2006.01)* ***B29C 70/20*** *(2006.01)*
***B29C 70/42*** *(2006.01)*

(52) Cooperative Patent Classification (CPC):
**F41H 5/0492; B29C 70/20; B29C 70/46; F41H 5/0478;** B29K 2075/00; B29K 2995/0089

(86) International application number:
**PCT/US2020/016995**

(87) International publication number:
**WO 2020/226713 (12.11.2020 Gazette 2020/46)**

## (54) BALLISTIC-RESISTANT COMPOSITE WITH BLOCKED ISOCYANATE

BALLISTISCH RESISTENTER VERBUNDSTOFF MIT BLOCKIERTEM ISOCYANAT

COMPOSITE À RÉSISTANCE BALLISTIQUE AVEC ISOCYANATE BLOQUÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.02.2019 US 201962802037 P**

(43) Date of publication of application:
**15.12.2021 Bulletin 2021/50**

(73) Proprietor: **Barrday Corporation**
**Charlotte, NC 28214 (US)**

(72) Inventor: **VAN HEERDEN, Jason**
**Cambridge, Ontario N1R 8M9 (CA)**

(74) Representative: **Dehns**
**10 Old Bailey**
**London EC4M 7NG (GB)**

(56) References cited:
**WO-A1-2014/152819**
**WO-A1-2018/152294**
**WO-A1-2018/152294**
**US-A- 3 916 060**
**US-A- 5 115 007**
**US-A- 5 480 706**
**US-A1- 2016 230 040**
**US-B1- 8 132 494**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

## BACKGROUND

Ballistic-resistant composites are used in various types of soft and hard armors. Hard armor is used in such articles as helmets, vehicles, riot shields, helicopters, cargo planes, and personal protective inserts. Soft armor is used in military vests, police vests, blast-blankets or ballistic curtains or in applications where rigid armor is not practical. Ballistic-resistant composites can include layers that have high performance fibers in a resin matrix. Rigid resin matrices are often formed from thermosetting resins, while semi-rigid or flexible resin matrices may be formed from thermoplastic resins or elastomers and/or low resin content thermosetting resins. Fabrication of some armors involves stacking multiple layers of ballistic-resistant composites and compressing the stack under heat to produce a laminate sheet. For some hard armors laminate sheets may be further processed with heat and pressure for incorporation into an end use product. WO 2018/152294 discloses the respective preambles of claims 1 and 13. WO 2014/152819 discloses polyurethanes, articles and coatings prepared therefrom and methods of making the same.

## SUMMARY

A ballistic-resistant composite according to an example of the present disclosure includes at least one layer that has a network of ballistic fibers and a resin matrix. The resin matrix has blocked isocyanate composed of isocyanate bonded with a blocking agent. The resin matrix is cross-linkable by heating to a temperature that causes the isocyanate to liberate from the blocking agent and the liberated isocyanate to reactively cause cross-linking of the resin matrix. Prior to heating and crosslinking, the resin matrix includes, by weight, from 0.2% to 25% of the blocked isocyanate.

In a further embodiment of any of the foregoing embodiments, the resin matrix includes polyurethane.

In a further embodiment of any of the foregoing embodiments, prior to heating and crosslinking, the resin matrix includes, by weight, from 2% to 18% of the blocked isocyanate.

In a further embodiment of any of the foregoing embodiments, prior ot heating and crosslinking, the resin matrix includes, by weight, from 8% to 12% of the blocked isocyanate.

In a further embodiment of any of the foregoing embodiments, the deblocking temperature is from 120°C to 140°C.

In a further embodiment of any of the foregoing embodiments, the blocking agent is selected from the group consisting of β-dicarbonyl compounds, ε-caprolactam, amides, imidazoles, and combinations thereof.

In a further embodiment of any of the foregoing embodiments, the resin matrix further includes a deblocking catalyst.

In a further embodiment of any of the foregoing embodiments, the network of ballistic fibers is selected from the group consisting of ultra-high molecular weight polyethylene fibers, aramid fibers, copolymer aramid fibers, and combinations thereof.

In a further embodiment of any of the foregoing embodiments, the resin matrix is a polyurethane selected from the group consisting of polyether-based urethane, polyester-based urethane, polycaprolactone-based urethane, and combinations thereof.

In a further embodiment of any of the foregoing embodiments, the at least one layer includes two of the layers laminated together.

A ballistic-resistant composite according to an example of the present disclosure includes at least one layer including a network of ultra-high molecular weight polyethylene (UHMWPE) fibers and a polyurethane resin matrix. The polyurethane resin matrix has blocked isocyanate composed of isocyanate bonded with a blocking agent. The blocked isocyanate has a deblocking temperature from 120°C to 140°C at which the isocyanate liberates from the blocking agent. Prior to heating and crosslinking, the resin matrix includes, by weight, from 0.2% to 25% of the blocked isocyanate.

In a further embodiment of any of the foregoing embodiments, prior to heating a crosslinking, the polyurethane resin matrix includes, by weight, from 2% to 18% of the blocked isocyanate.

In a further embodiment of any of the foregoing embodiments, the blocking agent is selected from the group consisting of β-dicarbonyl compounds, ε-caprolactam, amides, imidazoles, and combinations thereof.

In a further embodiment of any of the foregoing embodiments, the polyurethane resin matrix is a polyurethane selected from the group consisting of polyether-based urethane, polyester-based urethane, polycaprolactone-based urethane, and combinations thereof.

In a further embodiment of any of the foregoing embodiments, the polyurethane resin matrix further includes a deblocking catalyst.

A method of forming a ballistic-resistant article according to an example of the present disclosure includes providing at least one layer that includes a network of ballistic fibers and a resin matrix. The resin matrix includes blocked isocyanate composed of isocyanate bonded with a blocking agent. The resin matrix is cross-linkable by heating to a

deblocking temperature that liberates the isocyanate from the blocking agent. The liberated isocyanate is reactive to cause cross-linking of the resin matrix. Prior to heating and crosslinking, the resin matrix includes, by weight, from 0.2% to 25% of the blocked isocyanate. The at least one layer is heated to at least the deblocking temperature to cause the resin matrix to cross-link.

A further embodiment of any of the foregoing embodiments includes compressing the at least one layer during the heating.

In a further embodiment of any of the foregoing embodiments, the deblocking temperature is from 120°C to 140°C.

## BRIEF DESCRIPTION OF THE DRAWINGS

The various features and advantages of the present disclosure will become apparent to those skilled in the art from the following detailed description. The drawings that accompany the detailed description can be briefly described as follows.

Figure 1A illustrates an example ballistic-resistant composite.
Figure 1B illustrates another example ballistic resistant composite.
Figure 2 illustrates a plurality of layers of the ballistic-resistant composite after heating and cross-linking.
Figure 3 illustrates a process of fabricating layers for the ballistic-resistant composite.
Figure 4 illustrates a rigid laminate.
Figure 5 illustrates an example of a hard armor product.

## DETAILED DESCRIPTION

Figure 1A schematically illustrates a representative portion of a ballistic-resistant composite 20 in the form of a layer 22. The layer 22 may be fabricated to desired sizes but typically will be produced as a thin sheet that can be divided into ply pieces. The layer 22 includes a network of ballistic fibers 24 and a resin matrix 26.

A "fiber" as used herein is an elongated body that is significantly longer than it is wide. The form of the "fiber" or "fibers" is not particularly limited and may be a monofilament, multifilament, ribbon, strip, yarn, or tape, and may be continuous or discontinuous, with a regular or irregular cross-section.

A "ballistic fiber" refers to a high performance fiber that is engineered for ballistic resistance. A ballistic fiber may also be considered to be a "high tenacity fiber" that has a tenacity of about 7 g/d (grams per denier) or more. Even higher tenacities may facilitate performance enhancement, such as greater than 10 g/d, greater than 16 g/d, greater than 22 g/d, greater than 28 g/d, or greater than 50 g/d. A ballistic fiber may further have a tensile modulus of about 150 g/d or more (ASTM 2256), and in some examples a modulus of 2000 g/d or more, and an energy-to-break of about 8 J/g (Joules per gram) or more (ASTM D2256).

In the illustrated example, the network of ballistic fibers 24 are ultra-high molecular weight polyethylene (UHMWPE) ballistic fibers. Although UHMWPE ballistic fibers are useful for high performance ballistic resistance, it is to be understood that the network of ballistic fibers 24 is not limited thereto. Other examples of the network of ballistic fibers 24 include, but are not limited to, highly oriented high molecular weight polyolefin fibers, high modulus or high tenacity polyethylene fibers and polypropylene fibers, aramid fibers, polybenzazole fibers, polyvinyl alcohol fibers, polyacrylonitrile fibers, liquid crystal copolyester fibers, polyamide fibers, polyester fibers, glass fibers, graphite fibers, carbon fibers, basalt or other mineral fibers, rigid rod polymer fibers, and mixtures and blends thereof.

The polymers forming the network of ballistic fibers 24 may are high-strength, high tensile modulus fibers. Examples include polyolefin fibers, including high density and low density polyethylene, extended chain polyolefin fibers, such as highly oriented, high molecular weight polyethylene fibers, such as ultra-high molecular weight polyethylene fibers, and polypropylene fibers, such as ultra-high molecular weight polypropylene fibers. Additional examples include para-aramid fibers, polyamide fibers, polyethylene terephthalate fibers, polyethylene naphthalate fibers, extended chain polyvinyl alcohol fibers, extended chain polyacrylonitrile fibers, polybenzazole fibers, such as polybenzoxazole (PBO) and polybenzothiazole (PBT) fibers, liquid crystal copolyester fibers and other rigid rod fibers such as pyridobisimidazole-2, 6-diyl (2,5-dihydroxy-p-phenylene) (e.g.,M5(R) fibers by Magellan Systems International of Richmond, Va. or as disclosed in U.S. Pat. Nos. 5,674,969, 5,939,553, 5,945,537, or 6,040,478). Additional examples include copolymers, block polymers and blends of the above materials. Example polyethylenes are extended chain polyethylenes having molecular weights of at least 500,000, at least one million, or between two million and five million. In some examples, the fibers are high-performance fibers such as extended chain polyethylene fibers, poly-para-phenylene terephthalamide fibers, which may also be referred to as aramid fibers (e.g., by DuPont (Kevlar®), Teijin (Twaron®), Kolon (Heracron®), or Hyosung Aramid), aromatic heterocyclic co-polyamides, which may also be referred to as modifed para-aramids (e.g., Rusar®, Autex®), ultra-high molecular weight polyethylene (UHMWPE)(e.g., by Honeywell, DSM, and Mitsui under the trade names

Spectra®, Dyneema®, and Tekmilon®, respectively, as well as Pegasus® yarn), poly(p-phenylene-2,6-benzobisoxazole) (PBO) (e.g., by Toyobo under the name Zylon®), and/ or polyester-polyarylate yarns (e.g., liquid crystal polymers produced by Kuraray under the trade name Vectran®). In some embodiments, industrial fibers such as nylon, polyester, polyolefin based yarns (including polyethylene and polypropylene), could also be used.

The resin matrix 26 is continuous in the illustrated example and fully or substantially fully embeds the network of ballistic fibers 24. The form, however, of the resin matrix 26 is not limited but the resin matrix 26 is at least in contact with the network of ballistic fibers 24. In this regard, the resin matrix 26 may be a continuous or discontinuous layer on the network of fibers 24, which as above may in the form of monofilaments, multifilaments, ribbons, strips, yarns, or tapes. For instance, as shown in Figure 1B, the resin matrix 26 is a continuous layer on the network of fibers 24. The resin matrix 26 may be applied to the network of fibers 24 by any suitable technique, including but not limited to, spraying, dipping, roller coating, hot-melt coating, powder scatter coating, or as a cast thin film that is laminated to the network of ballistic fibers 24.

The base resin of the resin matrix 26 in the illustrated example is a thermoplastic, although the examples herein may be adapted to semi-thermoset polyurethanes or to any resin matrix that is capable of post-polymerization modifications through the use of blocked isocyanates. Example polymers include those with nucleophilic species, such as amines, alcohols and thiols, that react readily with isocyanates groups and generally do not require a cross-linking catalyst for the reaction. One example polymer for the resin matrix 26 is polyurethane resin that is aromatic or aliphatic. Examples include, but are not limited to, polyester-based polyurethane, polyether-based polyurethane, and polycaprolactone-based polyurethane. In additional examples, crystalline polyester polyurethane is used. In further examples, the resin matrix 26 is a blend of at least one polymer comprising nucleophilic species as above, blended with one or more additional polymers that may or may not have nucleophilic species for cross-linking. An example additional polymer that does not have nucleophilic species for isocyanate-based cross-linking is rubber, such as styrene-isoprene-styrene, or styrene-butadiene rubber (SBR). An example of additional polymers that have nucleophilic species for cross-linking may include, but are not limited to, polyester polyols, polycarbonate polyols, polycaprolactone polyols, polybutadiene polyols, or polysulfide polyols. In further examples, the blended polymers may include, but are not limited to, thermoplastic urethane blended with a polymer of significantly different tensile strength, modulus, and percent elongation. It is also proposed that the benefits of latent reactive crosslinkers could be used with thermosetting resins that can be B-staged or not fully cured to impart improved ballistic performance to the final consolidated armor. Examples of such chemistries would be chloroprene rubbers that are vulcanized in their final consolidation step. Blocked Isocyanate resins in these chemistries have shown improved fiber-resin bond strength which in turn results in improved inter-laminar tensile bond strength between separate layers of the ballistic composite. This improved inter-laminar tensile bond strength has experimentally been directly correlated to improved back-face deformation; improved multi-hit ballistic properties in composite armor and improved composite armor performance when used as a backing material behind ceramic armor in a ceramic/composite armor sandwich.

In further examples, the base polyurethane resin has an ultimate tensile strength of about 0.5 MPa to about 70 MPa, a tensile modulus (at 100% elongation) of about 0.35 MPa to about 30 MPa, and an elongation to break of about 100% to about 3000%. In further examples, the ultimate tensile strength is from 3.4 MPa to 40 MPa, the tensile modulus (at 100% elongation) is from 1.4 MPa to 28 MPa, and the elongation to break is from 300% to 1500%.

The ballistic-resistant composite 20 is comprised of, by weight percent based on the total weight of the composite 20, about 1% to about 98% of the polyurethane resin matrix 26. More typically, the ballistic-resistant composite 20 will be comprised of about 5% to about 40% of the polyurethane resin matrix 26, or about 10% to about 25% of the polyurethane resin matrix 26.

The polyurethane resin matrix 26 includes blocked isocyanate, which is represented at 28 in the inset in Figure 1 (where R is an alkyl or aryl; N is nitrogen; H is hydrogen; O is oxygen; and B a blocking agent). The blocked isocyanate 28 is composed of isocyanate that is bonded (covalently) with the blocking agent. The blocked isocyanate 28 may also be referred to herein as a latent reactive cross-linker.

The bonding between the isocyanate and the blocking agent is reversible in dependence on temperature. Thus, the isocyanate is blocked (i.e., the blocking agent is bonded with the isocyanate) at relatively low temperatures, deblocked (i.e., the blocking agent is not bonded to the isocyanate) at relatively high temperatures, and can be cycled between the blocked and deblocked states by adjusting the temperature. When the blocking agent is bonded with the isocyanate the blocking agent prevents the isocyanate from reacting (i.e., the blocked isocyanate is inert in the polyurethane resin matrix 26), and when the blocking agent is not bonded to the isocyanate the isocyanate is reactive (i.e., the isocyanate is reactive in the polyurethane resin matrix 26).

In general, the temperature at which initial deblocking is observed from the blocked state is called the deblocking temperature. Deblocking temperatures can be found in general literature and used as guidance in selecting useful blocked isocyanates 28 for a particular implementation of the ballistic-resistant composite 20. Additionally or alternatively, deblocking temperatures can be readily experimentally determined through a known measurement technique. Deblocking temperatures may be given in the literature as temperature ranges in order to encompass variations. Such ranges or variations do not hinder the understanding or practice of this disclosure, at least because ranges or variations in combination with the teachings of this disclosure will permit selection of one or more blocked isocyanates 28 for a given

implementation. The deblocking temperatures may also be modified by the addition of one or more deblocking catalysts.

The resin matrix 26 is cross-linkable by heating to a temperature that causes the isocyanate to liberate from the blocking agent and the liberated isocyanate to reactively cause cross-linking of the resin matrix 26. Such a temperature is equal to or above the deblocking temperature of the selected blocked isocyanate 28 but will not be so high as to damage the network of fibers 24 or other constituents in the ballistic resistant composite 20, if present. At a minimum, the temperature will be below a temperature at which the network of fibers 24 degrades in the implemented process conditions (time, temperature, pressure, etc.).

Figure 2 illustrates a plurality of the layers 22 of the ballistic-resistant composite 20 after such heating. Only the resin matrix 26 is represented in the figure (the network of fibers 24 is not shown). As depicted, the now cross-linked resin matrix 26 is made up of molecule chains of relatively high molecular weight resin 26a. For polyurethane, the resin 26a is the reaction product of isocyanates, polyols, and chain-extenders. The polyol and isocyanate form relatively "soft" blocks in the molecular chains that provide flexibility and elastomeric character. The chain extenders form relatively "hard" blocks in the molecular chains that provide toughness and strength. In general, isocyanates, polyols, and chain-extenders are well understood, and it is to be appreciated that ratios, chemical structures, molecular weights, and chemical functionality of these can be modified to provide a wide variety of different resins 26a to be used in accordance with this disclosure.

The reactions leading to cross-linking are presented in the reaction equations below. As above, R is an alkyl or aryl; N is nitrogen; H is hydrogen; O is oxygen; and B the blocking agent. R' is also an alkyl or aryl. The first reaction represents the reversible blocking/deblocking of the blocked isocyanate 28, in which the isocyanate is liberated from the blocking agent. The second reaction represents the cross-linking involving reaction with the liberated isocyanate with a nucleophilic species, in this case a hydroxyl group. Except for the isocyanate, the liberated blocking agent is inert with respect to reactivity with other constituents in the polyurethane resin matrix 26 or the network of fibers 24. If there is no isocyanate, the blocking agent will remain as a non-functional residual substance in the ballistic-resistant composite 20 or off-gassed from the resin matrix entirely, as with the case of some phenol blocking agents. The liberated isocyanate, which is an electrophile, is reactive with nucleophiles, such as alcohols, amines, and water. Such reactions serve to connect molecular chains and thereby form cross-links, represented at 26b in Figure 2. Additionally, in a stacked layer arrangement, at least some of the reactions occur at layer interfaces such that the cross-links 26b chemically join the layers together.

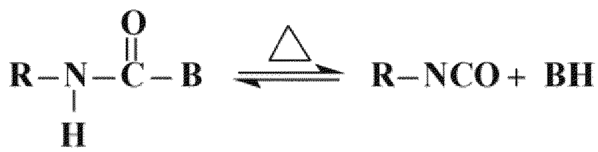

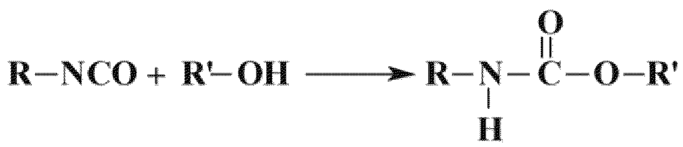

**BH - Blocking agent**

The blocked isocyanate 28 is generally a reaction product of isocyanates with one or more types of blocking agents. Example blocking agents 28 include, but are not limited to, phenol, nonyl phenol, β-dicarbonyl compounds, methylethylketoxime, alcohols, ε-caprolactam, amides, imidazoles, pyrazoles, and combinations thereof. Example isocyanates include diisocyanates, such as but not limited to, methylene diphenyl diisocyanate (MDI), toluene diisocyanate (TDI), hexamethylene diisocyanate (HDI), isophorone diisocyanate (IPDI), and combinations thereof. Further examples of blocked isocyanates may include, but are not limited to, diisopropyl amine-blocked isocyanate, t-butyl benzyl amine-blocked isocyanate, 3,5-dimethyl pyrazole-blocked isocyanate, or diethyl malonate-blocked isocyanate, and Table 1 below lists additional blocking agents and their respective deblocking temperatures.

Table 1: Blocking agents and deblocking temperatures.

| **Blocking functional group** | **Specific examples** | **Additional information** | **Deblocking Temp. (°C)** |
|---|---|---|---|
| Alcohol | Butanol<br>Ethanol<br>Isopropanol | Generally found to have high deblocking temperatures. The presence of halogens found to significantly decrease the deblocking temperature. | 95-200 |

(continued)

| Blocking functional group | Specific examples | Additional information | Deblocking Temp. (°C) |
|---|---|---|---|
| Phenol | Phenol<br>o-Cresol<br>p-Chlorophenol | Easy to demonstrate the effect of substituent type and position on the deblocking temperature. | 60-180 |
| Pyridinol | 2-Pyridinol<br>2-Chloro-3-pyridinol | Deblocking at a lower temperature than phenol due to the hydrogen bond formation between the amine and the urethane bond. | 110 |
| Oxime | MEKO51 Benzophenone Oxime | MEKO found to be most common blocking agent in the literature, with the blocking reaction requiring no catalyst. Strong substituent effect on deblocking temperature. | 85-260 |
| Thiophenol | Thiophenol<br>Pentafluorothiophenol | Thiophenol found to have faster deblocking rates than phenol | 130-170 |
| Mercaptan | 1-Dodecanethiol | Restricted applicability due to odours produced in production and deblocking. | 75-115 |
| Amide | Acetanilide<br>Methylacetamide | Found to have lower deblocking temperatures than MEKO blocked isocyanates. | 100-130 |
| Cyclic amide | Pyrrolidinone<br>ε-Caprolactam | ε-Caprolactam does not volatilize after deblocking and is able to act as a plasticizer. | 70-170 |
| Imide | Succinimide<br>N-Hydroxyphthalimide | Along with amines, the deblocking temperature is heavily influenced by the polarization of the NH bond. | 110-145 |
| Imidazole/ midazoline | Imidazole<br>2-Methylimidazole<br>2-Phenylimidazole | Basicity of imidazole able to accelerate the blocking reaction without additional catalyst. Large substituent effect on deblocking temperature. | 120-290 |
| Pyrazole | Dimethylpyrazole 2-Methyl-4-ethyl-5-methylpyrazole | When deblocked in the presence of amines, deblock via a cyclic transition state releasing the isocyanate, in contrast to phenol blocked isocyanates in which the amine attacks the urethane bond. Deblocking temperature is lowered when the basicity of the pyrazole is increased. | 85-200 |
| Triazole | Benzotriazole Triazole | Along with pyrazoles, triazoles produce less yellowing than oximes. | 120-250 |
| Amidine | Bicyclic amidine | Radical intermediates formed during cleavage. | 70-175 |
| Hydroxamic acid ester | Benzylmethacrylo-hydroxamate | Deblocking proceeds via a six membered transition state. | 50 |
| Intra-molecular | Uretdione<br>2-Oxo-1,3-diazepane-1-carboxylate | Uretdione is a self-condensation product, and can be further transformed into a trimeric species (isocyanurates). | 150-200 |
| Other | Sodium bisulphite | Sodium bisulphite is frequently used in waterborne coatings as the blocked product is water soluble, as well as being relatively cheap with no pollution. | 50-160 |

The amount of blocked isocyanate 28 initially in the resin matrix 26 (prior to heating and cross-linking) is, by weight percent, from 0.2% to 25% based on the total dry weight of the resin formulation. Low effectiveness is expected below 0.2%, while diminishing effectiveness is expected above 25%. Further useful amounts are from 2% to 18%, or from 8% to 12%. In additional examples, the amount of blocked isocyanate 28 is selected based on the resin chemistry and available nucleophilic groups for cross-linking, the chemistry of the blocked isocyanate and its functionality, and the degree

of cross-linking desired. For instance, a degree of cross-linking can be selected based on physical and ballistic testing of samples as per those familiar in the art. An excess of diisoyanate in the formulation and over-crosslinking produces no mechanical or ballistic advantages. The optimal amount of blocked isocyanate to add to the base TPU resin may be selected based on: a) the TPU or other polymer being used and its available OH and amine groups; b) the type of blocked isocyanate being used and its functionality and c) the degree of crosslinking desired. The optimal degree of crosslinking can be determined by both physical and ballistic testing of the composite armor systems as per those familiar in the art. Even very small additions of blocked isocyanates, e.g. less than 0.5% percent by weight, in the resin formulation can have ballistic beneficial results, however an excess of diisocyanate in the formulation and overcrosslinking produces no mechanical or ballistic advantages.

The blocked isocyanate 28 also permits the layers 22 to be individually formed and laminated together as long as the temperature does not exceed the deblocking temperature, and then later processed above the deblocking temperature for consolidation and cross-linking into an armor article that has improved ballistic performance. For comparison, a pure thermoplastic resin can repeatedly be softened to provide high formability, but the laminated layers are only mechanically joined because there is no chemical bonding under the heat and pressure. Conversely, for a pure thermoset, there are chemical reactions during curing that may help join laminated layers together, but the laminated layers are not formable once cross-linked. The layer or layers 22 thus provide a heretofore unknown combination of formability and performance due to the cross-linking.

To enable consolidation and cross-linking into an armor article, the blocked isocyanate 28 must not substantially be unblocked by heating above the deblocking temperature in the earlier heating to laminate the layers 22 together. If cross-linked prior to then, the layers 22 would no longer be able to form chemical crosslinks in a later consolidation step thus impacting the ballistic performance of the final armor panel after consolidation. In some examples, the limitation of not heating above the deblocking temperature prior to the later processing into the armor may yield a relatively tight processing temperature window to which the ballistic resistant composite 20 must be designed with regard to the blocked isocyanate 28.

For instance, the processing temperature window relates to the maximum allowable temperature that the network of fibers 24 can be exposed to without causing damage. As an example based on UHMWPE fibers, the maximum use temperature of UHMWPE is approximately 140°C (248°F). Thus, at no time in any processing step can the fibers be heated above that temperature. Conversely, heat and pressure must be used to consolidate and laminate the layers 22 together. In general, relatively high temperatures and pressure are desirable to properly distribute resin and laminate layers 22 together. For an example having UHMWPE fibers in a thermoplastic polyurethane matrix, such temperatures can reach almost 120°C. Therefore, in this example, there is a processing temperature window of only 20° (120° to 140°) for consolidation and cross-linking into a hard armor article. In that regard, a blocked isocyanate 28 that has a deblocking temperature from 120° to 140° is selected for the polyurethane resin matrix 26, or catalyzed to unblock and react within this temperature range. As will be appreciated from this example, if different fibers were used that have a higher maximum use temperature, the processing temperature window would be larger.

In further examples, the resin matrix additionally includes a deblocking catalyst that decreases the deblocking temperature of the blocked isocyanate 28. For example, the deblocking catalyst includes, but is not limited to, dibutyltin dilaurate, zinc(II)-acetylacetonate, bismuth tris(2-ethylhexanoate), tertiary amines such as 1,4-diazabicyclo[2.2.2] octane, quinuclidine, or mixtures thereof. The resin matrix 26 includes, by weight, 0.05% to 1.5% of the deblocking catalyst.

Figure 3 illustrates an example process for forming the layers 22 and a laminate. Initially, the network of fibers 24 is coated with the resin matrix 26. The coating can be applied using known techniques, such as impregnation, lamination, or powder coating. In some examples, the resin matrix 26 is applied as an aqueous medium, as a solvent-based medium, as a cast film-form, or as hot-melt granules. An example aqueous medium may include fillers, viscosity modifiers, and the like and have a solids content from about 10% to about 80% by weight, with the remaining weight being water.

Layers 22 are then laminated together under heat and pressure (under the deblocking temperature as discussed above) to produce laminate 30. For unidirectional arrangements of the fibers 24 in each layer 22, the layers 22 may be cross-plied in the lamination step, such as a 0°/90° configuration. The total number of layers 22 that are laminated together may depend on the end use article to be produced, but will typically be from two to 1000 of the layers 22, such as only two layer 22, up to 10 layers 22, up to 100 layers 22, or up to 250 layers 22. The thickness of the layers 22 will typically be from 25 micrometers to 0.001 meters.

As shown in Figure 4, two or more laminates 30 are then consolidated under heat and pressure (above the deblocking temperature as discussed above) to form a laminate armor 32. Except for the resin matrix 26 and blocking/deblocking temperatures, this process is otherwise known and those skilled in the art will thus recognize appropriate process conditions in view of this disclosure.

Although not limited, Figure 5 illustrates an example of an end product hard armor 50. The hard armor 50 includes a spall layer 52 that serves as the front or strike face of the hard armor 52. The spall layer 52 is backed by a metal or ceramic layer 54. An adhesive layer 56 joins the metal or ceramic layer 54 with the laminate armor 32 as described above. The laminate armor 32 is backed by a trauma layer 58. As examples, the spall layer 52 includes E-glass, S-glass, carbon or

aramid fabric, or unidirectional fibers in a thermosetting (e.g. epoxy) or thermoplastic resin. The spall layer 52 may be single-layered or multi-layered and may include adhesive film layers. If ceramic, the ceramic layer 54 may be alumina, silicon carbide, or boron carbide, but other ceramics may also be used. If metal, the metal layer 54 may be steel, aluminum or titanium or other ballistic efficient metal. The trauma layer 58 may be a closed-cell foam that is designed to both minimize Back Face Deformation and increase comfort to a wearer. In further examples, the trauma layer 58 is excluded and has a coating that holds the armor 50 together in the event of a ballistic impact.

In the hard armor 50 and other armors, the stiffness of the laminate armor 32 facilitates improved ballistic-resistance performance by better supporting the ceramic. A well-supported ceramic fails under compression, where it is very strong, versus under tension where it is relatively weak, thus increasing the ballistic efficiency (see below) of the whole armor system 50. A well-supported ceramic is necessary to both fracture the high-hardness penetrator into fragments and to distribute the impact load over a large area of the backing material. In this example, increased stiffness/ceramic support is achieved by cross-linking due to the blocked isocyanate 28 forming bonds in three-dimensions to increase molecular weight of the polyurethane. The flexible polyol segments in the polyurethane provide the soft elastic properties of the resin matrix 26, while the rigid isocyanate-chain extender sections provide good physical properties. In addition, however, the cross-linking from the blocked isocyanate 28 may facilitate enhanced rigidity (i.e., increased sonic modulus), toughness, and environmental stability. The layers 22 or laminate 30 are not limited to hard armor and may be used in a wide variety of ballistic-resistant products or other products that would benefit therefrom, such as products for knife and stab protection.

As used herein, "Ballistic Efficiency," "Ballistic Mass Efficiency ($E_m$)" or variations, is a measure used to compare the ballistic effectiveness of different armors against a projectile of specified kinetic energy and shape. It can be thought of as the ratio of an armor's $V_{50}$ performance to its areal density, with higher ($E_m$) numbers being better. This ratio represents the mass effectiveness of the armor.

The blocked isocyanates 28 herein are applied to polyurethane resins. Application to other resins may have either have a negative or positive influence on its and the resultant composite armor's ballistic efficiency depending on its both its inherent mechanical properties and how aggressively it bonds to the high performance yarns within the composite. Testing of UHMWPE with various different ethylene acrylic chemistries (EAA) found that low molecular weight EAAs, which were hence quite tacky and soft in nature benefited ballistically from the addition of blocked isocyanates and the subsequent latent crosslinking of the EAA matrix. Conversely, high-molecular weight EAA's, that were inherently rigid in nature (and had active functionality for crosslinking) were detrimentally affected by the addition of blocked-isocyanates and the subsequent increase its stiffness and mechanical properties due to latent crosslinking. It was felt that in such examples the high-performance fibers within the resin matrix may themselves have become more rigidly fixed thus causing a projectile to shear the fibers rather than having them fail in tension, which is optimal for energy dissipation and ballistic performance.

It is also proposed that the benefits of latent reactive crosslinkers could be used with thermosetting resins that can be B-staged or not fully cured to impart improved ballistic performance to the final consolidated armor. Examples of such chemistries would be chloroprene rubbers that are vulcanized in their final consolidation step. Blocked Isocyanate resins in these chemistries have shown improved fiber-resin bond strength which in turn results in improved inter-laminar tensile bond strength between separate layers of the ballistic composite. This improved inter-laminar tensile bond strength has experimentally been directly correlated to improved back-face deformation; improved multi-hit ballistic properties in composite armor and improved composite armor performance when used as a backing material behind ceramic armor in a ceramic/composite armor sandwich.

Aspects of the present disclosure are based on the concept that ballistic improvement in fiber-reinforced composite armor is achievable by modifying its sonic modulus of the ballistic panel "as a whole". Work relating to improving composite ballistic armor performance has focused not on this, but rather on optimizing the theoretical ballistic potential of the high-performance yarns within the composite, by optimizing the composite construction - i.e., via yarn spreading or via lower resin content construction and by via optimizing the surface interaction or the yarn with resin matrix.

The ballistic theory behind aspects of the present disclosure, that better performing ballistic composite armor, with improved ballistic resistance properties can be manufactured from latent-reactive resin chemistries is as follows. If two identical fiber-reinforced composite armor panels were produced from orthogonal UD fabric using the same high-performance yarn, at the same fiber-fraction volume, and only differed in that the resin matrix of one had a higher sonic modulus than the other; it is predicted that that the one with the higher sonic modulus will ballistically outperform the other.

This is shown mathematically in Equation 1 below, which can be used to predict the theoretical ballistic performance of a high-performance yarn constrained within a fiber-reinforced composite armor made from continuous unidirectional fibers:

Equation 1: from van Heerden in U.S. Patent No. 10,234,244.

$$U_{yRM} = \left[\left(\frac{Y \cdot \varepsilon_f}{2\rho_f}\right) \cdot \frac{1}{2}\left((2-a)\sqrt{\frac{E_f}{\rho_f}} + a\sqrt{\frac{E_M}{\rho_M}}\right)\right]^{1/3}$$

Where: $U_{yRM}$ = the theoretical ballistic performance of a 'constrained yarn' within a resin matrix.

$a$ = represents the % interaction between the resin matrix and the ballistic yarn in the rigid composite armor.

$Y$ = the yield strength of the yarn;

$\varepsilon_f$ = the yarn's % strain to failure;
$E_C$ = The elastic modulus of the cured composite armor - based on rule of mixtures
$E_f$ = The elastic modulus of the high performance yarn within the composite armor

$E_M$ = The sonic modulus of the resin matrix within the cured composite armor

$V_f$ = The fiber fraction volume of the high performance yarn in the cured composite armor

$V_M$ = The volume of matrix resin in the cured composite armor, where $(V_M = (1 - V_f)$

$\rho_C$ = the density of the of the cured composite armor - based on rule of mixtures

$\rho_f$ = the density of the fiber/yarn within the composite armor

$\rho_M$ = the density of the rein matrix in the cured composite armor

As can be seen from this equation, the yarn's ballistic performance is a function of both its own elastic modulus and density and the sonic modulus and density of the resin matrix itself. This makes sense as the speed of sound through an anisotropic composite material will be some average of both yarn's sound speed and the resin's sound speed.

Further, given the extremely high elastic moduli of ballistic yarns (e.g. ~75 GPa for Kevlar 29) relative to most standard composite resin matrices (0.2 GPa for LDPE) the equation also shows that resin matrix typically has a negative impact on the theoretical ballistic performance of the "constrained" yarn that the "negative impact" of the resin matrix can be minimized by:

A. Reducing the % interaction between the resin matrix and the ballistic yarn in the composite armor and/or
B. By increasing the sonic modulus of the resin matrix - i.e.by increasing it sonic modulus or by decreasing its density.
C.

Aspects of the present disclosure address factor B above by using latent reactive crosslinking to increase the resin's and consequently the composite armor's sonic modulus as a whole. The increase in sonic modulus facilitates improved ballistic performance for the ballistic resistant composite 20 by increasing both its bending stiffness and its tensile strength. In turn, the ballistic-resistant composite 20 may be used to facilitate enhancement of ballistic-resistant end-use article, such as reduction in back-face deformation in plates (small arms protective inserts). Reduction in back face deformation generally derives from decreased levels of layer-to-layer delamination in composite armor, as set for for example in U.S. Publication 2014/0248463. Low back face deformation is an important ballistic consideration for personal body armor and often the limiting factor in a ballistic armor design rather than V50 performance.

As discussed in Walker, J. D. (2001). Ballistic limit of fabrics with resin. In 19th International Symposium on Ballistics, Interlaken, Switzerland:

1. Bending stiffness increases the target resistance to deformation, leading to improvements in ballistic performance;
2. Bending stiffness leads to an increase in the transverse wave velocity, reducing the strain and thus increasing the ballistic performance;
3. Bending stiffness increases panel hardness, deforming the projectile more, increasing the presented area of the projectile and therefore increasing the ballistic performance

Zoran S. Petrović (1991) paper on "The effect of crosslinking on properties of polyurethane elastomers" found that the addition of latent isocyanate crosslinkers improved the TPU's tensile strength, without appreciably impacting the resin's tear strength, hardness, and soft segment glass transition temperature. Consequently this improved tensile strength may help the UHMWPE layers to not catastrophically delaminate, but rather slide by each other in controlled delamination, thereby increasing the theoretical ballistic potential of the yarn.

The examples below demonstrate further aspects of the disclosure.

U.S. Patent 8,256,019 teaches about the beneficial use of thermoplastic semicrystalline polyurethane resin in hard armor composites but does not consider the use of cross-linking agents, and certainly not latent-crosslinking agents. U.S. Publication 2016/0102949 teaches of the beneficial ballistic benefits of isocyanate crosslinkers in polyuria resins but does not teach of their use with polyurethanes, does not consider latent-crosslinking and does consider their use in making stable rolled-good fabric for future use in composite armor. Instead Smith teaches of a polyrurea resin with limited pot-life being applied to ballistic yarn via, spraying, casting or injection molding to make a finished ballistic armor - not its fabric precursor.

The composite 20 may also facilitate stab and knife protection from creating 2, 4 or 6 UD orthogonal fabrics that are flexible, but also exceptionally well consolidated and crosslinked to help defeat stab and knife threats. The composite 20 may also facilitate production of stab and knife fabrics, woven or in UD, in continuous roll form, as opposed to a batch-process under high pressures and temperatures to force a high modulus, low flow resin into the individual yarn bundles. In the composite 20, yarn bundles can be thoroughly impregnated with a low viscosity un-crosslinked resin in a continuous coating process that can later be laminated together or simply crosslinked with applied heat and pressure.

**Example 1:**

Standard woven UHMWPE fabric was produced as per Honeywell fabric Style 903. This fabric was woven using Spectra® 900, 1200den (1330 dtex) input yarn, which was woven into a 21x21 plain weave construction using methods familiar to those in the industry and a rapier weaving machine. This fabric was then scoured (cleaned) to remove the applied yarn finish oils and to prepare it for coating with different resin systems. This fabric has been used commercially for years in helmets and hard armor applications and was selected as a base fabric for resin development work. When used in hard armor and helmets it is typically scoured, corona treated then impregnated with thermoset vinyl-ester resin. This impregnated fabric is then cut to size, stacked into multiple layers and pressed under heat and pressure to cure and form a rigid composite ballistic armor. The uncoated fabric has a nominal areal density of 237g/m$^2$ loom state (after weaving) and an areal density after scouring of 234g/m$^2$ (conditioned weight) and 228g/m$^2$ when bone dry. The tensile properties of Spectra®900 fiber, with a tenacity of 30g/den (2.57GPa) and a modulus of 850g/den(73GPa) are low relative to that of Spectra®1000 fiber (tenacity = 36g/den (3.08GPa), modulus = 1320g/den (113GPa)) and Spectra®2000 fiber (tenacity = 38g/den (3.25GPa), modulus = 1320g/den (113GPa)) commonly used in higher performing orthogonal UD armor but is perfectly adequate for use as the base substrate in comparative ballistic resin testing.

This style 903 UHMWPE fabric was subsequently knife-over roll coated with two water-based TPU resins, resin A without latent reactive cross-linker and resin B with latent reactive cross-linker, to give a dry coating add-on of 34g/m$^2$. This coating add-on of 34g/m$^2$ correlates to a dry-resin content (DRC) of 13% when pressed into rigid composite armor. The same base TPU resin chemistry was used for both resin A and B; an aqueous thermoplastic aromatic polyester-polyurethane dispersion, however for resin B, a latent reactive blocked isocyanate crosslinker was added to the resin and made-up 10% of the resin's total dry-solid weight. The base TPU resin had a tensile strength of 40 MPa (5800 psi), an elongation to break of ~400% and a modulus at 100% elongation of 14MPa (2030 psi). The blocked isocyanate was a water-based aliphatic blocked polyisocyanate with high reactivity, good thermal stability and high flexibility. Its base chemistry was hexamethylene diisocyanate (HDI) and had a reported unblocking temperature of 120°C (248°F). Both the resin A and resin B coated fabrics were dried in a forced-air coating oven at below 120°C (248oF), cut into 40.6x40.6cm (16x 16") squares, stacked into 38 layer panels and pressed at 127°C (260°F), at 207bar (3000psi) for 50 min to form rigid consolidated hard armor ballistic composite panels. These panels were cooled to room temperature under pressure and had an areal density 9.765 kg/m$^2$ (2.0 psf). The ballistic properties of these panels were subsequently tested against both 17gn (22cal) and 44gn (30cal) fragment simulating projectiles (FSPs) according to Mil-STD-662F. Panels pressed with resin A. without latent reactive cross-linker, had an average 17gn, V50 performance of 702m/s (2302fps), while panels pressed with resin B, with latent reactive cross-linker, had a 17gn,V50 performance of 713m/s (2339fps).

Similarly, when tested with 44gn FSP's, 38 layer, 9.765 kg/m$^2$ (2.0 psf) panels pressed with resin A, without latent reactive cross-linker, had an average (n=3) 44gn, V50 performance of 623.4 m/s(2044fps), while panels pressed with resin B, with latent reactive cross-linker, had an average (n=3) 44gn,V50 performance of 646.3m/s(2121fps); representing a ballistic improvement of ~3.7%.

**Example 2:**

In this example composite hard armor panels were prepared and pressed in the same manner as in Example 1, but instead of the style 903 woven UHMWPE fabric being knife-over roll coated with TPU it was scatter coated with two different TPU powder resins; resin C and resin D to give a dry coating add-on of 34g/m$^2$. Resin C was a TPU powder with hydroxyl-functional groups, a high rate of crystallization and low thermoplascity. Resin D, was the same powder TPU as C but added to it was a blocked isocyanate crosslinker at 10% by weight. The blocked isocyanate was a solid crystalline environmentally stable TPU with high reactivity, elasticity and good flow properties. The base chemistry was a blocked cycloaliphatic polyisocyanate, namely 4,4'-methylenebis cyclohexyl isocyanate (H12MDI) with a reported unblocking temperature of 130-135°C (266°F-275°F). It was first ground then blended with Resin C prior to scatter coating. After scatter coating the Resin C and resin D were melted onto the surface of the UHMWPE fabric using IR heaters. Care was taken not to melt the fabric or to go above 130°C (266°F). Once coated, the resin C and D coated fabric was cut into 40.6x40.6cm (16x16") squares, stacked into 38 layer panels and pressed at 135°C(275°F), at 207bar (3000psi) for 60 min to form rigid consolidated hard armor ballistic composite panels. These panels were cooled to room temperature under pressure and had an areal density 9.765 kg/m$^2$ (2.0 psf). The ballistic properties of these panels were subsequently tested against 44gn (30cal) fragment simulating projectiles (FSPs) according to Mil-STD-662F.

Panels pressed with resin C (without latent reactive cross-linker) had an average (n=3) 44gn,V50 performance of 787m/s (2582fps), while panels pressed with resin D (with latent reactive cross-linker) had and average (n=3) 44gn, V50 performance of 835m/s (2740fps). This represents a ballistic improvement of ~6.1%.

**Example 3:**

In this example composite hard armor panels were prepared and pressed in the same manner as those in Example #1, but instead of the style 903 woven UHMWPE fabric being coated with TPU it was coated with two different water-based ethylene acrylic acid (EAA) resins - resin E and F to give a dry coating add-on of 34g/m$^2$. The same base EAA resin chemistry was used for both resin E and F; an aqueous, low-molecular weight, highly flexible ethylene copolymer dispersion with a low heat seal temperature and good crosslink-ability. To Resin F, however a latent reactive blocked isocyanate crosslinker was added which made-up 8% of the resin's total dry-solid weight. The blocked isocyanate was same from example #1 with an unblocking temperature of 120°C (248°F).

As with example #1, both the resin E and resin F coated fabrics were dried in a forced-air coating oven cut into squares, stacked into 38 layer panels and pressed at 127°C(260°F), at 207bar (3000psi) for 50 min to form rigid consolidated hard armor ballistic composite panels. These panels were cooled to room temperature under pressure and had an areal density 9.765 kg/m$^2$ (2.0 psf). The ballistic properties of these panels were subsequently tested against both 17gn (22cal) and 44gn (30cal) fragment simulating projectiles (FSPs) according to Mil-STD-662F. Panels pressed with resin E (i.e. without latent reactive cross-linker, had an average 17gn,V50 performance of 635m/s (2083fps), while panels pressed with resin F, with latent reactive cross-linker, had a 17gn,V50 performance of 667m/s (2188fps). Similarly, panels pressed with resin E (i.e. without latent reactive cross-linker) had an average (n=3) 44gn,V50 performance of 540.6 m/s(1774fps), while panels pressed with resin F, with latent reactive cross-linker, had an average (n=3) 44gn,V50 performance of 563.8 (1850fps). Hence, while the ballistic efficiency of this EAA resin in combination with UHMWPE fabric was not as good as other TPU resins tested, it did show that this invention is transferrable to other thermoplastic resins systems that can be readily crosslinked with blocked isocyanates. Further, it stands to reason that resin F, latent crosslinked EEA may be ballistically advantageous with para-aramid based armors where EAA are already used.

**Example 4: (Comparative)**

In this example composite hard armor panels were prepared and pressed in the same manner as those in Example #1, but with various other resin systems - Resin G, Resin H, Resin I, Resin J and Resin K were included for comparison purposes. Resin G, was Prinlin and aqueous Styrene-Isoprene-Styrene (Kraton) resin system. Prinlin has been used in UHMWPE armor for years as it is ballistically efficient, but typically lacks the rigidity necessary for use in hard armor applications such has helmets and SAPI plates. Resin H - was Dispercoll U42, a low crystallinity polyether based TPU. Resin I, was a film-cast TPU + latent reactive adhesive resin chemistry. Resin J was a thermoset vinyl-ester resin commonly used in ballistic helmets and Resin K was a linear low-density polyethylene powder, which was included to illustrate the impact a less ballistic efficient resin system. The ballistic properties of these panels were subsequently tested against both 17gn (22cal) and 44gn (30cal) fragment simulating projectiles (FSPs) according to Mil-STD-662F and compared with Resin A and Resin D from examples #1 and 2 respectively. These comparative results demonstrate the ballistic benefit achieved through the use of latent reactive cross-linkers (i.e. Resin D and Resin I respectively) and it also shows that the process of first casting TPU+blocked isocyanate as a film then laminating it onto fabric, or a UD fiber web, illustrated by Resin I, may have ballistic advantages over coating or impregnating UHMWPE yarn directly with resin

thereby encapsulating it. The advantages of film based UD is taught in U.S. Patent 5,635,288.

**Example 5:**

A two-ply non-woven composite was formed from layers of unidirectionally oriented 780dtex (700den) high tenacity UHMWPE yarn with a tenacity of 36g/den (3.11GPa) and a modulus of 1250g/den (108.5GPa). Unitapes were prepared by passing the fibers from a creel and through a combing station to form a unidirectional network. The fiber network was then placed on a carrier web and the fibers were coated separately with two different two water-based TPU resins, resin W (without latent reactive cross-linker) and resin W+XL with latent reactive cross-linker added. Resin W was an aqueous thermoplastic amorphous polyether-polyurethane dispersion with a tensile strength of 3.45 MPa (500 psi), an elongation to break of ~750% and a modulus at 100% elongation of only 1.38MPa (200 psi). Resin W+XL, was the same TPU as W but added to it was a blocked isocyanate crosslinker at 10% by weight. The blocked isocyanate was a water-based aliphatic blocked polyisocyanate with good thermal stability and high flexibility. Its base chemistry was HDI having an unblocking temperature of ~120°C (248°F).

The coated fiber network was then passed through an oven to evaporate the water in the composition and was wound onto a roller, with a carrier web. The resulting structure contained about 18% by weight of the resin matrix, based on the total weight of the composite. Two continuous rolls of unidirectional fiber prepregs, of each resin chemistry, W and W+XL, were prepared in this manner, and the corresponding unitapes were cross-plied, along with to removal of the carrier webs so as to form 0°/90° consolidated UD orthogonal fabric rolls. Panels of these two materials measuring 40.6x40.6cm (16x16") were stacked into 84 and 168 layer panels and pressed at 130°C (265°F), at 27.6 bar (400psi) for 35 min and 45 min respectively to form rigid consolidated hard armor ballistic composite panels. These flat panels were also cooled to room temperature under pressure prior to removal from the press. The 84 layer panels had an areal density 7.32 kg/$m^2$ (1.50 psf) and the 168 layer panels had an areal density 14.65 kg/$m^2$ (3.00psf). The 84 layer, 1.5psf panels were tested, clamped in a frame and air-backed, against 17gn (22cal) FSP's and the 168 layer panels were tested, clamped in a frame and air backed, against 44gn (30cal) fragment simulating projectiles (FSPs) according to Mil-STD-662F. Panels pressed with resin W (without latent reactive cross-linker, had an average 17gn, FSP V50 performance of 682m/s (2237fps), while panels pressed with resin W+XL, with latent reactive cross-linker, had a 17gn,FSP V50 performance of 751m/s (2464 fps), corresponding to a ballistic improvement of ~10%.

Similarly, the 3.0psf panels of resin W, had an average 44gn, FSP V50 performance of 832m/s (2730fps), while panels pressed with resin W+XL, with latent reactive cross-linker, had a 44gn FSP,V50 performance of 929m/s (3048 fps), corresponding to a significant ballistic improvement of ~11%.

**Example 6:**

In this example composite hard armor panels were prepared and pressed in the same manner as those in Example #5, but two new aqueous resins were used instead: i.e. Resin Y (without latent reactive cross-linker) and resin Y+XL, with latent reactive cross-linker added. Resin Y was a blend of low-melt point (40°C, 104°F), high-elongation thermoplastic polyether-polyurethane blended with a soft styrene-Isoprene-styrene (SIS) block copolymer at 20% by weight. No data on the tensile strength, elongation or modulus of TPU resin of this formulation was available. Resin Y+XL, was the same blended chemistry as Y, but added to it was a blocked isocyanate crosslinker at 8% by weight. The blocked isocyanate was a water-based aliphatic blocked polyisocyanate with good thermal stability and high flexibility. Its base chemistry was HDI having an unblocking temperature of ~120°C (248°F).

Using the same input UHMWPE yarn and process as in Example 5, two 0°/90° consolidated UD orthogonal fabric rolls, one of each resin chemistry, Y and Y+XL, were prepared. Panels of these two materials measuring 40.6x40.6cm (16x16") were stacked into 168 layer panels and pressed at 130°C (265°F), at 27.6 bar (400psi) for 45 min to form rigid consolidated hard ballistic composite panels. These flat panels were cooled to room temperature under pressure prior to removal from the press. The 168 layer panels had an areal density 14.65 kg/$m^2$ (3.00psf) and were tested against 44gn (30cal) fragment simulating projectiles (FSPs) according to Mil-STD-662F. The 3.0psf panels of resin Y, had an average 44gn, FSP V50 performance of 896m/s (2939fps), while panels pressed with resin W+XL, with latent reactive cross-linker, had a 44gn FSP,V50 performance of 979m/s (3212fps), corresponding to a ballistic improvement of ~9.3%. This illustrates the potential for this invention to be used in blended TPU resins combining different resin chemistries.

**Example 7:**

In this example composite hard armor panels were prepared and pressed in the same manner as those in Example #5, using a third commercially available base TPU resin stand-alone, Resin Z and with latent reactive cross-linker added, Resin Z+XL. Resin Z, was a blocked aliphatic polyether dispersion with a relatively high tensile strength of 40MPa (5800 psi), an elongation to break of ~1000% and a modulus at 100% elongation of ~7MPa (1015 psi). Resin Z+XL, was the

same TPU as Z but added to it was a blocked isocyanate crosslinker at 8% by weight. The blocked isocyanate was a highly branched urethane prepolymer with an unblocking temperature of equal to or greater than 120°C (248°F).

Using the same input UHMWPE yarn and process as in Example 5, two 0°/90° consolidated UD orthogonal fabric rolls, one of each resin chemistry, Z and Z+XL, were prepared. The dry resin content of both panels was measured to be 16% by weight of the resin matrix, based on the total weight of the composite. Panels of these two materials measuring 40.6x40.6cm (16x16") were stacked into 90 layer panels and pressed at 127°C (260°F), for 35 minutes at both relative low pressure 27.6 bar (400psi) and at high pressure 207bar (3000psi), to form rigid consolidated composite panels. These flat panels were cooled to room temperature under pressure prior to removal from the press.

The 90 layer panels had an areal density of ~7.32 kg/$m^2$ (1.50psf) and were tested against 17gn (22cal) FSP's, according to Mil-STD-662F. The results of the testing suggest benefits pressing at relatively low pressure (i.e. 400 psi) or at relatively high pressures (i.e. >3000 psi).

**Example 8:**

In this example composite hard armor panels were prepared and pressed in a similar manner as those in Example #5, but instead new Resin X was used. Resin X was a blended TPU resin with blocked isocyanate crosslinker added. The TPU component of Resin X was 50% by weight and it had a tensile strength of 30MPa (4350psi), an elongation to break of ~1000% and a modulus at 100% elongation of ~22MPa (3150 psi). The latent reactive cross-linker used was a water-based aliphatic HDI blocked polyisocyanate having an unblocking temperature of ~120°C (248°F).

In this example a 4-ply, 0°/90°/0°/90° non-woven consolidated UD orthogonal fabric composite was formed from layers of unidirectionally oriented 1900dtex (1710den) high tenacity UHMWPE yarn with a tenacity of 36g/den (3.11GPa) and a modulus of 1150g/den (99.4GPa). The dry resin content of the UD fabric was measured to be 16.5%. Panels of this material measuring 40.6x40.6cm (16x16") were stacked into 57 layer panels and pressed. The 57 layer panels had an areal density of 14.65 kg/$m^2$ (3.00psf) and were tested against 44gn (30cal) fragment simulating projectiles (FSPs) according to Mil-STD-662F. Pressed panels were cooled to room temperature under pressure prior to removal from the press.

Panel $X_A$ was pressed at 130°C (265°F), for 25 minutes at low pressure 2.8bar (40psi), to fully react the blocked isocyanate present in the resin matrix, then the pressing pressure was increased to 207bar (3000psi) and it was pressed for another 20 minutes to form a rigid consolidated composite panel. Panel $X_B$ was pressed at 130°C (265°F), for 45 minutes at 207bar (3000psi) to form a rigid consolidated composite panel. Panel $X_A$ represents a panel that was consolidated at 3000 psi but one in which all the latent crosslinking occurred at low pressures (40 psi). Panel $X_B$, in comparison, represents a panel that was both consolidated & crosslinked at high pressures (3000 psi). Panel $X_A$ had an average 44gn, FSP V50 performance of 922m/s (3024fps), while Panel $X_B$ had an average 44gn, FSP V50 performance of 1031m/s (3382fps). This illustrates advantages in relation to ballistic mass efficiency.

**Example 9:**

Composite hard armor panels were prepared and pressed in a similar manner as those in Example #8. In this example however panels of material measuring 40.6x40.6cm (16x16") were stacked into 28 layer panels and pressed. The 28-layer panels had an areal density of 7.32 kg/$m^2$ (1.5psf) and were water jet cut into test coupons and tested in accordance with the specifications of the three-point bend test of ASTM standard D790-17 in order to measure the Flexural Modulus of the pressed panels. This was determined by the following equation from ASTM standard D790-17 (*Tangent Modulus of Elasticity*):

$$E_B = L^3 m / 4bd^3$$

where:

*EB* = modulus of elasticity in bending, MPa (psi),
*L* = support span, mm (in.),
*b* = width of beam tested, mm (in.),
*d* = depth of beam tested, mm (in.), and
*m* = slope of the tangent to the initial straight-line portion of the load-deflection curve, N/mm (lbf/in.) of deflection.

It was expected that an increased level of crosslinking in the composite hard armor panel would also be evident by a corresponding increase in the flexural modulus of the composite panel.

Pressed panels were cooled to room temperature under pressure prior to removal from the press. Panel $X_C$ was

pressed at 130°C (265°F), for 25 minutes at low pressure 2.1bar (31psi), to fully react the blocked isocyanate present in the resin matrix, then the pressing pressure was increased to 27.6bar (400psi) and it was pressed for another 20 minutes to form a rigid consolidated composite panel. Panel $X_D$ was pressed at 130°C (265°F), for 45 minutes at 27.6bar (400psi) to form a rigid consolidated composite panel. Panel $X_C$ represents a panel that was consolidated at 400 psi but one in which all the latent crosslinking occurred at low pressures (~31 psi). Panel $X_D$, in comparison, represents a panel that was both consolidated & crosslinked at moderate pressure 400 psi. Panel $X_C$ had an average flexural modulus of 9.897 MPa (1435.42 x$10^3$psi), while, while Panel $X_D$ had a significantly higher flexural modulus of 10.961 MPa (1589.78 x$10^3$psi). It is believed that this increase in flexural modulus, due to latent reactive crosslinking, can be directly correlated to the panel's increase in ballistic mass efficiency as shown in Example 8. This increase in composite armor stiffness can also be thought to reduce backface deformation in comparative ballistic testing.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

## Claims

1. A ballistic-resistant composite (20) comprising:

   at least one layer (22) including a network of ballistic fibers (24) and a resin matrix (26), the resin matrix (26) including blocked isocyanate (28) composed of isocyanate bonded with a blocking agent, the resin matrix (26) being cross-linkable by heating to a temperature that causes the isocyanate to liberate from the blocking agent and the liberated isocyanate to reactively cause cross-linking of the resin matrix (26),
   **characterised in that** prior to heating and crosslinking, the resin matrix (26) includes, by weight, from 0.2% to 25% of the blocked isocyanate (28).

2. The ballistic-resistant composite (20) as recited in claim 1, wherein the resin matrix (26) includes polyurethane.

3. The ballistic-resistant composite (20) as recited in claim 1 or 2, wherein, prior to heating and crosslinking, the resin matrix (26) includes, by weight, from 2% to 18% of the blocked isocyanate (28), preferably from 8% to 12% of the blocked isocyanate (28).

4. The ballistic-resistant composite (20) as recited in any of claims 1 to 3, wherein the deblocking temperature is from 120°C to 140°C.

5. The ballistic-resistant composite (20) as recited in any of claims 1 to 4, wherein the blocking agent is selected from the group consisting of β-dicarbonyl compounds, ε-caprolactam, amides, imidazoles, and combinations thereof.

6. The ballistic-resistant composite (20) as recited in any of claims 1 to 5, wherein the resin matrix (26) further includes a deblocking catalyst.

7. The ballistic-resistant composite (20) as recited in any of claims 1 to 6, wherein the network of ballistic fibers (24) is selected from the group consisting of ultra-high molecular weight polyethylene fibers, aramid fibers, copolymer aramid fibers, and combinations thereof, preferably wherein the resin matrix (26) is a polyurethane selected from the group consisting of polyether-based urethane, polyester-based urethane, polycaprolactone-based urethane, and combinations thereof.

8. The ballistic-resistant composite (20) as recited in any of claims 1 to 7, wherein the at least one layer (22) includes two of the layers (22) laminated together.

9. The ballistic-resistant composite (20) of claim 1, wherein the network of ballistic fibers (24) is a network of ultra-high molecular weight polyethylene (UHMWPE) fibers and the resin matrix (26) is a polyurethane resin matrix, and wherein the blocked isocyanate (28) has a deblocking temperature from 120°C to 140°C at which the isocyanate liberates from the blocking agent.

10. The ballistic-resistant composite (20) as recited in claim 9, wherein, prior to heating and crosslinking, the polyurethane

resin matrix (26) includes, by weight, from 2% to 18% of the blocked isocyanate (28).

11. The ballistic-resistant composite (20) as recited in claim 9 or 10, wherein the blocking agent is selected from the group consisting of β-dicarbonyl compounds, ε-caprolactam, amides, imidazoles, and combinations thereof.

12. The ballistic-resistant composite (20) as recited in any of claims 9 to 11, wherein the polyurethane resin matrix (26) is a polyurethane selected from the group consisting of polyether-based urethane, polyester-based urethane, polycaprolactone-based urethane, and combinations thereof, preferably wherein the polyurethane resin matrix (26) further includes a deblocking catalyst.

13. A method of forming a ballistic-resistant article, the method comprising:
providing at least one layer (22) that includes a network of ballistic fibers (24) and a resin matrix (26), the resin matrix (26) includes blocked isocyanate (28) composed of isocyanate bonded with a blocking agent, the resin matrix (26) being cross-linkable by heating to a deblocking temperature that liberates the isocyanate from the blocking agent, the liberated isocyanate being reactive to cause cross-linking of the resin matrix (26), **characterized in that** prior to heating and crosslinking, the resin matrix (26) includes, by weight, from 0.2% to 25% of the blocked isocyanate (28); and heating the at least one layer (22) to at least the deblocking temperature to cause the resin matrix (26) to cross-link.

14. The method as recited in claim 13, including compressing the at least one layer (22) during the heating.

15. The method as recited in claim 13 or 14, wherein the deblocking temperature is from 120°C to 140°C.

## Patentansprüche

1. Ballistisch resistenter Verbundwerkstoff (20), umfassend:

   mindestens eine Schicht (22), die ein Netz aus ballistischen Fasern (24) und eine Harzmatrix (26) beinhaltet, wobei die Harzmatrix (26) blockiertes Isocyanat (28) beinhaltet, das sich aus mit einem Blockierungsmittel gebundenem Isocyanat zusammensetzt, wobei die Harzmatrix (26) durch Erhitzen auf eine Temperatur vernetzbar ist, die das Isocyanat veranlasst, sich von dem Blockierungsmittel zu befreien, und das befreite Isocyanat reaktiv eine Vernetzung der Harzmatrix (26) zu veranlassen,
   **dadurch gekennzeichnet, dass** die Harzmatrix (26) vor dem Erhitzen und Vernetzen, nach Gewicht, 0,2% bis 25% des blockierten Isocyanats (28) beinhaltet.

2. Ballistisch resistenter Verbundwerkstoff (20) nach Anspruch 1, wobei die Harzmatrix (26) Polyurethan beinhaltet.

3. Ballistisch resistenter Verbundwerkstoff (20) nach Anspruch 1 oder 2, wobei die Harzmatrix (26) vor dem Erhitzen und Vernetzen, nach Gewicht, 2 % bis 18 % des blockierten Isocyanats (28), vorzugsweise 8 % bis 12 % des blockierten Isocyanats (28), beinhaltet.

4. Ballistisch resistenter Verbundwerkstoff (20) nach einem der Ansprüche 1 bis 3, wobei die Deblockierungstemperatur 120°C bis 140 °C beträgt.

5. Ballistisch resistenter Verbundwerkstoff (20) nach einem der Ansprüche 1 bis 4, wobei das Blockierungsmittel aus der Gruppe bestehend aus β-Dicarbonylverbindungen, ε-Caprolactam, Amiden, Imidazolen und Kombinationen davon ausgewählt ist.

6. Ballistisch resistenter Verbundwerkstoff (20) nach einem der Ansprüche 1 bis 5, wobei die Harzmatrix (26) weiter einen Deblockierungskatalysator beinhaltet.

7. Ballistisch resistenter Verbundwerkstoff (20) nach einem der Ansprüche 1 bis 6, wobei das Netz aus ballistischen Fasern (24) aus der Gruppe bestehend aus Polyethylenfasern mit ultrahohem Molekulargewicht, Aramidfasern, Copolymer-Aramidfasern und Kombinationen davon ausgewählt ist, wobei die Harzmatrix (26) vorzugsweise ein Polyurethan ist, das aus der Gruppe bestehend aus Urethan auf Polyetherbasis, Urethan auf Polyesterbasis, Urethan auf Polycaprolactonbasis und Kombinationen davon ausgewählt ist.

8. Ballistisch resistenter Verbundwerkstoff (20) nach einem der Ansprüche 1 bis 7, wobei die mindestens eine Schicht

(22) zwei der miteinander laminierten Schichten (22) beinhaltet.

**9.** Ballistisch resistenter Verbundwerkstoff (20) nach Anspruch 1, wobei das Netz aus ballistischen Fasern (24) ein Netz aus Fasern aus Polyethylen mit ultrahohem Molekulargewicht (UHMWPE) ist und die Harzmatrix (26) eine Polyurethanharzmatrix ist, und wobei das blockierte Isocyanat (28) eine Deblockierungstemperatur von 120 °C bis 140 °C aufweist, bei der sich das Isocyanat von dem Blockierungsmittel befreit.

**10.** Ballistisch resistenter Verbundwerkstoff (20) nach Anspruch 9, wobei die Polyurethanharzmatrix (26) vor dem Erhitzen und Vernetzen, nach Gewicht, 2 % bis 18 % des blockierten Isocyanats (28) beinhaltet.

**11.** Ballistisch resistenter Verbundwerkstoff (20) nach Anspruch 9 oder 10, wobei das Blockierungsmittel aus der Gruppe bestehend aus β-Dicarbonylverbindungen, ε-Caprolactam, Amiden, Imidazolen und Kombinationen davon ausgewählt ist.

**12.** Ballistisch resistenter Verbundwerkstoff (20) nach einem der Ansprüche 9 bis 11, wobei die Polyurethanharzmatrix (26) ein Polyurethan ist, das aus der Gruppe bestehend aus Urethan auf Polyetherbasis, Urethan auf Polyesterbasis, Urethan auf Polycaprolactonbasis und Kombinationen davon ausgewählt ist, wobei die Polyurethanharzmatrix (26) vorzugsweise weiter einen Deblockierungskatalysator beinhaltet.

**13.** Verfahren zum Bilden eines ballistisch resistenten Artikels, wobei das Verfahren umfasst:
Bereitstellen mindestens einer Schicht (22), die ein Netz aus ballistischen Fasern (24) und eine Harzmatrix (26) beinhaltet, wobei die Harzmatrix (26) blockiertes Isocyanat (28) beinhaltet, das sich aus mit einem Blockierungsmittel gebundenem Isocyanat zusammensetzt, wobei die Harzmatrix (26) durch Erhitzen auf eine Deblockierungstemperatur vernetzbar ist, die das Isocyanat aus dem Blockierungsmittel befreit, wobei das befreite Isocyanat reaktiv ist, um eine Vernetzung der Harzmatrix (26) zu veranlassen, **dadurch gekennzeichnet, dass** die Harzmatrix (26) vor dem Erhitzen und Vernetzen, nach Gewicht, 0,2 % bis 25 % des blockierten Isocyanats (28) beinhaltet; und Erhitzen der mindestens einen Schicht (22) auf mindestens die Deblockierungstemperatur, um die Harzmatrix (26) zu veranlassen, sich zu vernetzen.

**14.** Verfahren nach Anspruch 13, das das Komprimieren der mindestens einen Schicht (22) beim Erhitzen beinhaltet.

**15.** Verfahren nach Anspruch 13 oder 14, wobei die Deblockierungstemperatur 120 °C bis 140 °C beträgt.

## Revendications

**1.** Composite à résistance balistique (20) comprenant :

au moins une couche (22) incluant un réseau de fibres balistiques (24) et une matrice de résine (26), la matrice de résine (26) incluant de l'isocyanate bloqué (28) composé d'isocyanate lié à un agent de blocage, la matrice de résine (26) étant réticulable par chauffage à une température qui amène l'isocyanate à se libérer de l'agent de blocage et l'isocyanate libéré à provoquer de manière réactive la réticulation de la matrice de résine (26), **caractérisé en ce qu'**avant le chauffage et la réticulation, la matrice de résine (26) inclut, en poids, de 0,2 % à 25 % de l'isocyanate bloqué (28).

**2.** Composite à résistance balistique (20) selon la revendication 1, dans lequel la matrice de résine (26) inclut du polyuréthane.

**3.** Composite à résistance balistique (20) selon la revendication 1 ou 2, dans lequel, avant le chauffage et la réticulation, la matrice de résine (26) inclut, en poids, de 2 % à 18 % de l'isocyanate bloqué (28), de préférence de 8 % à 12 % de l'isocyanate bloqué (28).

**4.** Composite à résistance balistique (20) selon l'une quelconque des revendications 1 à 3, dans lequel la température de déblocage va de 120°C à 140°C.

**5.** Composite à résistance balistique (20) selon l'une quelconque des revendications 1 à 4, dans lequel l'agent de blocage est choisi dans le groupe consistant en les composés β-dicarbonyle, l'ε-caprolactame, les amides, les imidazoles et des combinaisons de ceux-ci.

6. Composite à résistance balistique (20) selon l'une quelconque des revendications 1 à 5, dans lequel la matrice de résine (26) inclut en outre un catalyseur de déblocage.

7. Composite à résistance balistique (20) selon l'une quelconque des revendications 1 à 6, dans lequel le réseau de fibres balistiques (24) est choisi dans le groupe consistant en des fibres de polyéthylène à poids moléculaire ultra élevé, des fibres d'aramide, des fibres d'aramide copolymère et des combinaisons de celles-ci, de préférence dans lequel la matrice de résine (26) est un polyuréthane choisi dans le groupe consistant en l'uréthane à base de polyéther, l'uréthane à base de polyester, l'uréthane à base de polycaprolactone et des combinaisons de ceux-ci.

8. Composite à résistance balistique (20) selon l'une quelconque des revendications 1 à 7, dans lequel la au moins une couche (22) inclut deux des couches (22) stratifiées ensemble.

9. Composite à résistance balistique (20) selon la revendication 1, dans lequel le réseau de fibres balistiques (24) est un réseau de fibres de polyéthylène à poids moléculaire ultra élevé (UHMWPE) et la matrice de résine (26) est une matrice de résine de polyuréthane, et dans lequel l'isocyanate bloqué (28) présente une température de déblocage de 120°C à 140 °C à laquelle l'isocyanate se libère de l'agent de blocage.

10. Composite à résistance balistique (20) selon la revendication 9, dans lequel, avant le chauffage et la réticulation, la matrice de résine de polyuréthane (26) inclut, en poids, de 2 % à 18 % de l'isocyanate bloqué (28).

11. Composite à résistance balistique (20) selon la revendication 9 ou 10, dans lequel l'agent de blocage est choisi dans le groupe consistant en les composés β-dicarbonyle, l'ε-caprolactame, les amides, les imidazoles et des combinaisons de ceux-ci.

12. Composite à résistance balistique (20) selon l'une quelconque des revendications 9 à 11, dans lequel la matrice de résine de polyuréthane (26) est un polyuréthane choisi dans le groupe consistant en l'uréthane à base de polyéther, l'uréthane à base de polyester, l'uréthane à base de polycaprolactone et des combinaisons de ceux-ci, de préférence dans lequel la matrice de résine de polyuréthane (26) inclut en outre un catalyseur de déblocage.

13. Procédé de formation d'un article à résistance balistique, le procédé comprenant :
la fourniture d'au moins une couche (22) qui inclut un réseau de fibres balistiques (24) et une matrice de résine (26), la matrice de résine (26) inclut de l'isocyanate bloqué (28) composé d'isocyanate lié à un agent de blocage, la matrice de résine (26) étant réticulable par chauffage à une température de déblocage qui libère l'isocyanate de l'agent de blocage, l'isocyanate libéré étant réactif pour provoquer la réticulation de la matrice de résine (26), **caractérisé en ce qu'**avant le chauffage et la réticulation, la matrice de résine (26) inclut, en poids, de 0,2 % à 25 % de l'isocyanate bloqué (28) ; et le chauffage de la au moins une couche (22) à au moins la température de déblocage pour provoquer la réticulation de la matrice de résine (26).

14. Procédé selon la revendication 13, incluant la compression de la au moins une couche (22) pendant le chauffage.

15. Procédé selon la revendication 13 ou 14, dans lequel la température de déblocage va de 120°C à 140°C.

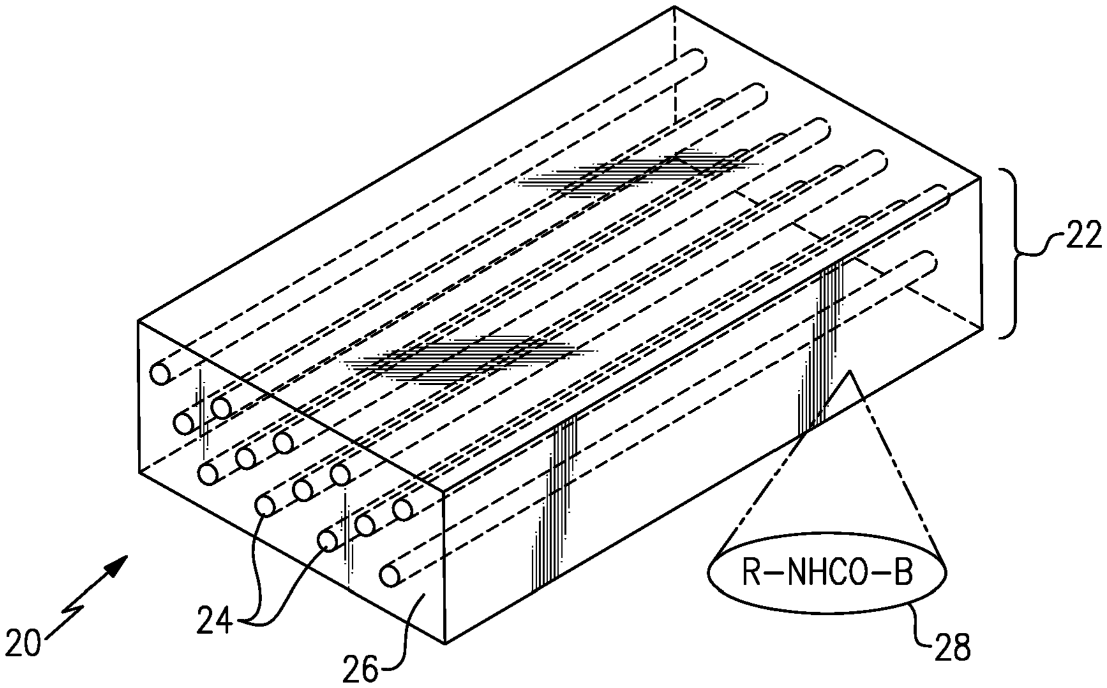


FIG.1A

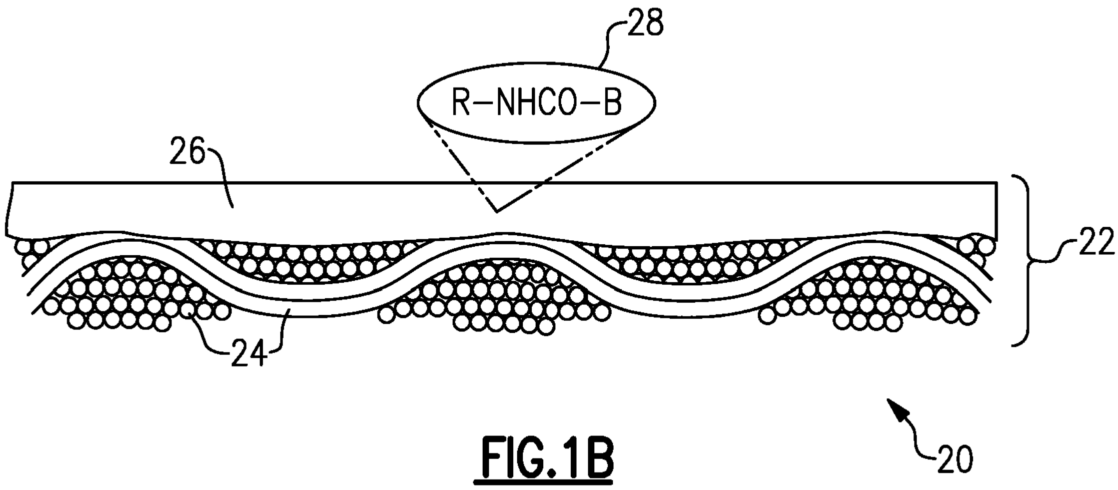


FIG.1B

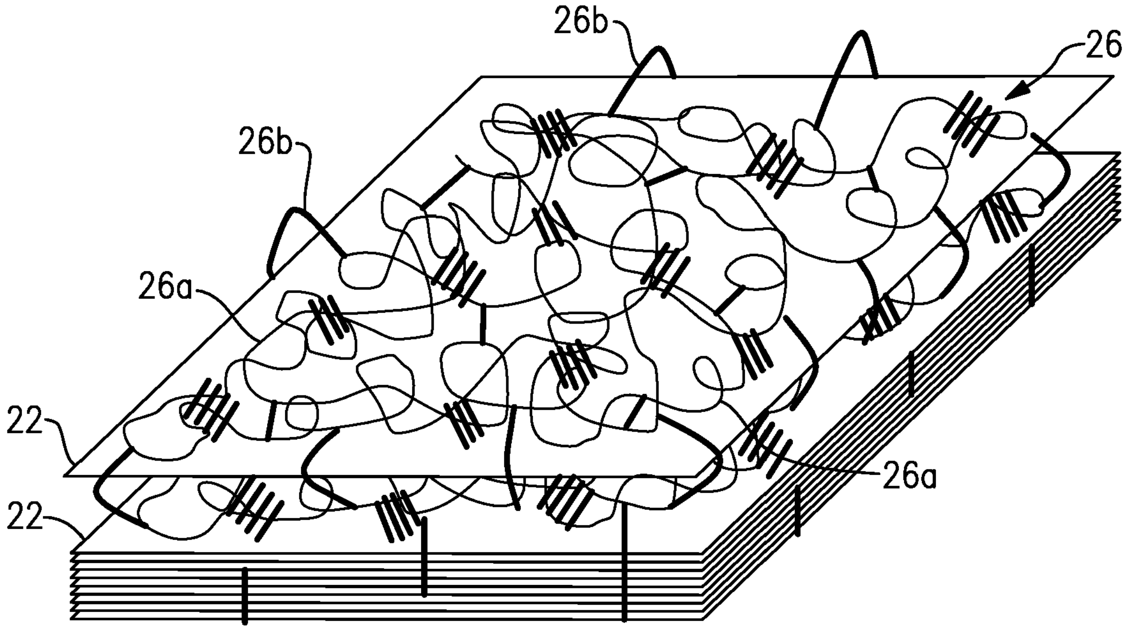


FIG.2

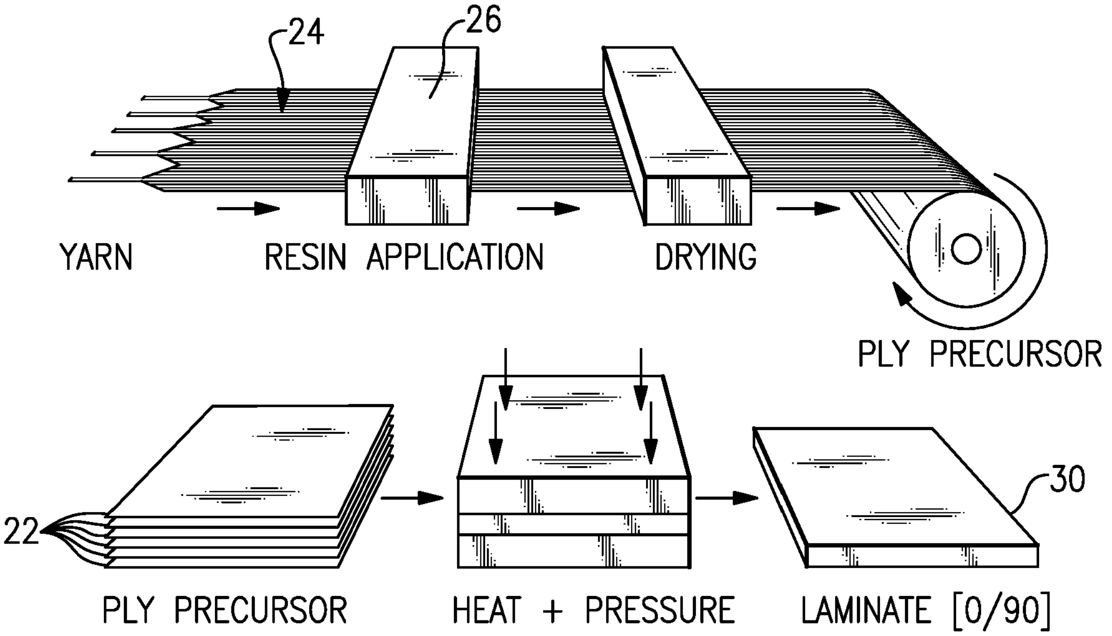


FIG.3

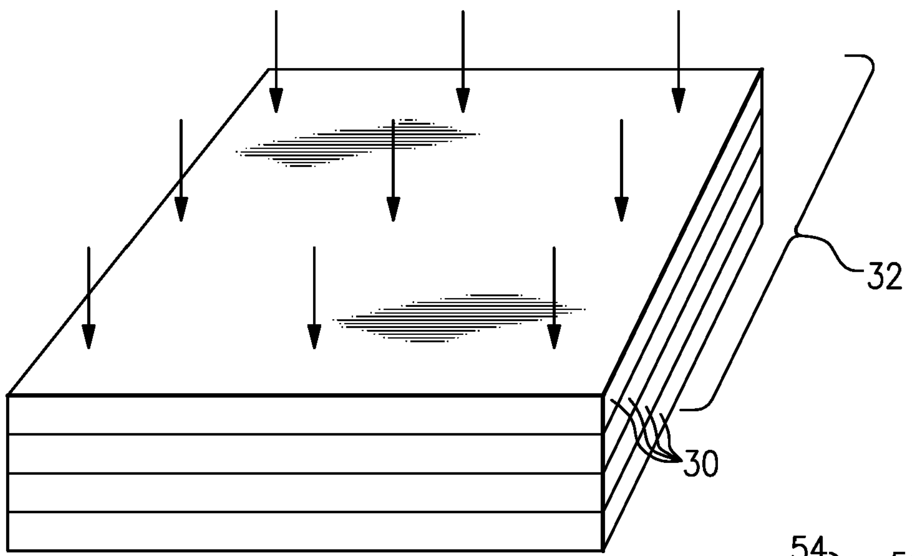


FIG.4

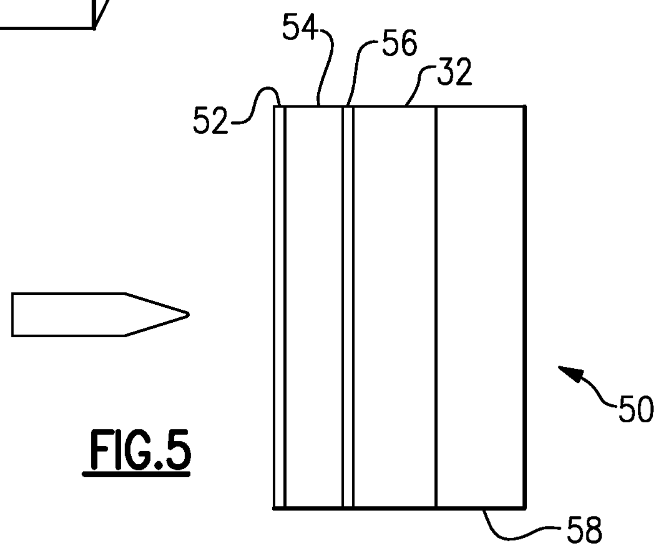


FIG.5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2018152294 A
- WO 2014152819 A
- US 5674969 A
- US 5939553 A
- US 5945537 A
- US 6040478 A
- US 20140248463 A
- US 8256019 B
- US 20160102949 A
- US 5635288 A


### Non-patent literature cited in the description


- **WALKER, J. D**. Ballistic limit of fabrics with resin. *In 19th International Symposium on Ballistics*, 2001